# EUROPEAN PATENT SPECIFICATION

(11) **EP 1 825 194 B1**
(45) Date of publication and mention of the grant of the patent: **17.02.2021**
(21) Application number: 05853357.1
(22) Date of filing: 08.12.2005
(51) Int. Cl.: F23D 11/44, F23C 5/32, F23K 5/22

(54) **METHOD AND APPARATUS FOR CONDITIONING LIQUID HYDROCARBON FUELS**
VERFAHREN UND VORRICHTUNG ZUR AUFBEREITUNG FLÜSSIGER KOHLENWASSERSTOFFBRENNSTOFFE
PROCEDE EST DISPOSITIF DE CONDITIONNEMENT DE COMBUSTIBLES HYDROCARBURES LIQUIDES

(30) Priority: 08.12.2004 US 634221 P
(43) Date of publication of application: 29.08.2007
(73) Proprietor: LPP Combustion, LLC, Columbia MD 21045 (US)
(72) Inventor: RAMOTOWSKI, Michael J., Columbia, Maryland 21044 (US); GAINES, Glenn C., Fallston, Maryland 21047 (US); JOKLIK, Richard G., Annapolis, Maryland 21401 (US); FULLER, Casey C., Columbia, Maryland 21045 (US); GOKULAKRISHNAN, Ponnuthurai, Columbia, Maryland 21044 (US); KLASSEN, Michael S., Columbia, Maryland 21045 (US); ESKIN, Leo D., Darnestown, Maryland 20878 (US); ROBY, Richard J., Columbia, Maryland 21045 (US)
(74) Representative: Wenger, Joel-Théophile
(86) International application number: PCT/US2005/044414
(87) International publication number: WO 2006/063126

(56) References cited:
- US-A- 3 840 321
- US-A- 3 847 534
- US-A- 3 866 585
- US-A- 4 058 977
- US-A- 4 148 599
- US-A- 4 399 079
- US-A- 4 928 015
- US-A- 5 035 227
- US-A- 5 138 163
- US-B1- 6 174 160
- US-B1- 6 350 116

## Description

### BACKGROUND INFORMATION

Low emissions from combustion devices are obtained by burning a lean mixture of fuel and air obtained by pre-mixing gaseous fuel and air; Dry Low NOx (DLN) technology gas turbines, for example, typically burn natural gas under lean, pre-mixed conditions.

Liquid fuels, by contrast, are typically burned by injecting a fuel spray directly into the combustor, this results in a diffusion flame in which the fuel is burned in a locally stoichiometric fuel/air mixture and causes high emissions. Under certain conditions, burning a liquid fuel is more desirable than burning a gaseous fuel. However, it would be desirable to avoid the high emissions associated with diffusion flames when burning such liquid fuels.

The document US4058977 describes a low emission combustion chamber in which vitiated products of combustion from a pilot burner are caused to swirl about the combustion chamber axis before fuel droplets are introduced into the vitiated, swirling combustion products for flash vaporization therein to produce a vaporized, swirling, vitiated fuel-air mixture so as to effect ignition lag until swirling combustion air can be mixed with the swirling mixture to molecularly premix the fuel and air and increase its oxygen content to reduce the ignition lag to effect autoignition at an equivalence ratio less than 1 so as to effect high-rate, lean burning in the primary combustion chamber. In the design proposed by this document, the fuel nozzles 104 are mounted uniquely on a sidewall of the combustion chamber. Document US3866585 A discloses vaporization of hydrocarbon fuel by using heat from hot recycled exhaust gas and maintaining the combustible mixture below the equilibrium temperature of the fuel vapour.

### SUMMARY

A method according to claim 7 and apparatus according to claim 1 for conditioning liquid fuels at a location external to a combustion device so that the resulting vapor phase fuel may be pre-mixed with air and burned under lean conditions, thus achieving low emissions, is described herein .Preferably, the liquid fuel is conditioned such that it may be used in a combustor configured for natural gas without modification to the combustor/fuel metering system.

In an embodiment, the liquid fuel is sprayed onto a hot surface using a geometry such that the entire spray is intercepted by the surface. Heat is added through the surface to maintain an internal surface temperature above the boiling point of the least volatile component of the liquid fuel. The liquid droplets impinging on the surface are thus flash vaporized such that there is no build up of bulk liquid or a liquid film in the vaporizer. A carrier gas, such as nitrogen or air, flows through the vaporizer to control the dew point of the resultant vapor phase mixture. The fuel nozzle is mounted at one end (the enclosed end) of a cylindrical chamber. The nozzle forms a hollow cone type spray with a spray angle chosen such that all of the spray impinges on the cylinder surface (in other embodiments a solid cone type spray nozzle is used). The preferred orientation is vertical, with the spray downward, so that the impingement of the spray on the walls is even. Two or more such chambers can be joined to a common manifold to accommodate higher capacities.

### BRIEF DESCRIPTION OF THE FIGURES

The features and advantages of the present invention will become more apparent from the detailed description set forth below when taken in conjunction with the drawings in which like reference numbers indicate identical or functionally similar elements.
Figure 1 is a schematic drawing of a fuel vaporizer according to a first embodiment which is not part of the present invention.
Figure 2 is a schematic drawing of a single nozzle vaporizer according to a second embodiment of the invention.
Figure 3 is a schematic drawing of a plurality of the vaporizers of Figure 2 joined to a common manifold according to a third embodiment of the invention.

### DETAILED DESCRIPTION

Various embodiments of methods and apparatuses for conditioning liquid fuels are discussed below. Specific details are set forth in order to provide a thorough understanding of the present invention. The specific embodiments described below should not be understood to limit the invention. Additionally, for ease of understanding, certain method steps are delineated as separate steps. These steps should not be understood as necessarily distinct or order-dependent in their performance unless so indicated.

Additional heat is added through the surface to prevent heat loss and to maintain an internal surface temperature above the boiling point of the least volatile component of the liquid. The diluent gas also serves to control the dew point of the resultant vapor phase mixture. Additional heating to augment the vaporization process in the event that the diluent flow or temperature fall below the minimum levels needed for complete vaporization is supplied by internal heaters. One application of the invention is the vaporization of liquid fuels, such as kerosene and heating oil, for introduction into a combustion device, such as a gas turbine. Pre-vaporizing the fuel in this manner allows the operation of the gas turbine in the lean, premixed mode, resulting in extremely low pollutant emissions.

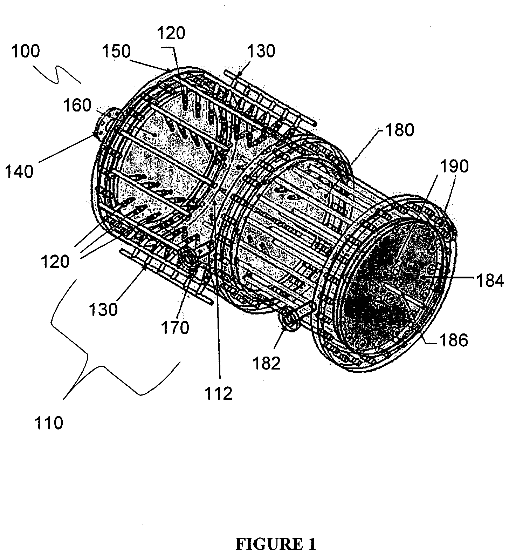

Figure 1 illustrates a fuel conditioner 100 according to a first embodiment which is not part of the present invention. The fuel conditioner 100 includes a cylindrical vaporization chamber 110. Liquid fuel is sprayed into the chamber 110 through nozzles 120 mounted on the sidewall 112 of the chamber 110. The nozzles 120 are pressure atomizing spray nozzles in some embodiments. In other embodiments, the nozzles 120 may be two-fluid nozzles (such as filming or "air" blast type nozzles), in which case the diluent (or carrier) gas may enter the chamber 110 through such two-fluid nozzles. In an alternative embodiment, the nozzles are mounted on a manifold which runs parallel to the axis of the cylindrical chamber and which gets installed from an end of the chamber.

In some embodiments, heating tape or heat tracing (MI cable) (not shown in Figure 1) is used to heat the sidewall and/or end wall. As discussed above, the heating of the sidewall and/or end wall of the chamber 110 serves to prevent heat loss and maintain an internal surface temperature above that of the boiling point for least volatile component of the liquid fuel.

In the embodiment of Figure 1 which is not part of the present invention, the nozzles 120 are arranged in rings spaced around the circumference of the cylinder, with each column of nozzles 120 supplied by one of a plurality of manifolds 130. Diluent gas is supplied through an inlet 140 that is in fluid communication with a plenum 150 formed by a space between the top end wall 160 of the chamber 110 and a perforated plate 160. The diluent gas enters the interior of the chamber 110 through perforations in the plate 160. The diluent gas is preferably a gas that has less oxygen than ambient air, such as nitrogen, steam, methane, oxygen depleted air, or exhaust gas from a combustion device. The diluent gas is preferably heated to at least the boiling point of the liquid such that the diluent gas supplies the heat required for vaporization of the liquid fuels entering the chamber 110 through the nozzles 120. As discussed above, the diluent gas also serves to lower the dew point of the vapor phase mixture. Lowering the dew point temperature is desirable so that downstream components, such as the line connecting the vaporizer to the combustion device, can be maintained at a temperature lower than that required for the initial vaporization. The use of an inert carrier gas can also serve to limit chemical reaction in the conditioner 100 and transfer lines connecting the conditioner 100 to a combustor, thus suppressing coking. Vaporized fuel exits the chamber through one or more exit ports 170 for transport to the combustion device.

In alternative embodiments, the diluent gas is introduced into the chamber 110 through nozzles arranged on the sidewall of the chamber 110 and positioned, for example, between the nozzles 120 and or on one of the end walls of the chamber 110. Depending on the location and method in which the diluent gas is introduced into the chamber 110, the diluent gas may be introduced in a co-flow arrangement, a counter-flow arrangement, and/or at various angles in order to, for example, induce a swirling flow inside the chamber 110.

Referring now back to Figure 1, an optional spool section 180 is attached to the chamber 110 in some embodiments. The length of the spool section 180 is chosen to increase the vaporizer residence time so that it is sufficient for complete evaporation of the fuel droplets. The spool section 180 preferably has a plurality of heating elements 190 disposed therein (two concentric rings of heating elements 190 are illustrated in Figure 1). The heating elements 190 preferably extend the length of the spool section 180, and may be electrical bayonet heaters, heat exchange tubes, or any other type of heating element. In some embodiments, each heating element 190 is provided with a separate temperature control.

The spool section 180 also includes one or more exit ports 182, similar to those of the chamber 110, through which vaporized liquid may exit the spool section 182. A drain 186 passes through the end cap 184 of the spool section 180 to allow any unvaporized liquids to be removed from the conditioner 100.

The spool section 180 may include a particulate collection device (not shown in Figure 1) in some embodiments. The particulate collection device controls particulate or droplet carryover exiting the conditioner 100. Possible particulate control devices include mist eliminators, cyclones, and filter elements.

In some embodiments, a preheater (not shown in Figure 1) is used to pre-heat the liquid prior to entry into the chamber 110. This lowers the amount of heat needed to vaporize the liquid in the chamber 110. Preheating also lowers the viscosity of the liquid, which improves the quality of the spray produced by the nozzles 120.

It should be understood that the number of nozzles 120, the length of the chamber 110 and the spool section 180 can be modified to suit desired operating conditions (e.g., volume of fuel needed, type of liquid fuel to be conditioned, etc.). Thus, the design illustrated in Figure 1 is easily scalable for a variety of operating conditions.

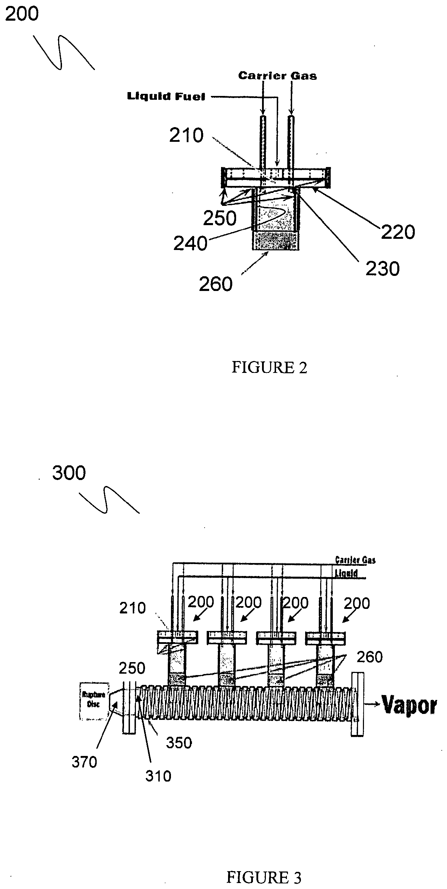

In the embodiments discussed above in connection with Figure 1 which are not part of the present invention, the liquid fuel does not impinge on any interior surface. In other embodiments, such as those illustrated in Figures 2 and 3, the liquid fuel does impinge on interior surfaces of a vaporization chamber. In such embodiments, the energy for vaporization is supplied by heat transfer through the walls of the vaporization chamber. The essential design feature of a fuel conditioner operating in this manner is the match of the heat transfer rate through the walls to the heat required to vaporize the liquid. This is achieved by matching the surface area used for vaporization with the liquid flow rate and the achievable heat flow through the walls. Since the heat requirement is different in different sections of the vaporizer, the heat input may be staged with separate temperature control for each stage.

Figure 2 is a schematic drawing of a single nozzle vaporizer 200 according to a second embodiment of the invention. Liquid fuel is sprayed into the vaporizer 200 through a nozzle 210 mounted on the end flange 220. A carrier gas such as nitrogen or air, which is preferably pre-heated to supply some of the heat required for vaporization, is also introduced through ports 230 on the end flange 220. As with the embodiment of Figure 1, the use of a carrier gas serves two purposes: 1) to aid in removing the vapor from vaporizing chamber, and 2) to lower the dew point temperature of the vapor. Lowering the dew point temperature is desirable so that downstream components, such as the line connecting the vaporizer to a combustion device, can be maintained at a temperature lower than that required for the initial vaporization. The use of an inert carrier gas can also serve to limit chemical reaction in the vaporizer and transfer lines, thus suppressing coking. There are many possible ways to introduce the carrier gas such as, but not limited to: in each vaporizer module, in the main body of the vaporizer, in an axial direction, and in a tangential direction to induce swirl. In the vaporizer 200, the carrier gas is injected tangentially at two ports 230 to induce a swirling co-flow.

The resulting spray from the nozzle 210 impinges on the interior cylindrical surface 240 of the vaporizer 200, and is evaporated due to heat input through the surface and from the hot carrier gas. The surface 240 is heated by a combination of electrical heating tape 250 and band heaters 260 in this embodiment. In other embodiments, the heat input may be supplied by heat exchange with a hot liquid or gas (such as steam or hot combustion products).

Figure 3 is a schematic diagram of a fuel conditioning system 300 with multiple single nozzle vaporization units 200. In order to maintain the optimum surface area to volume ratio for spray vaporization, additional capacity is obtained by grouping multiple vaporizer "legs" onto a common manifold 310. The body of the manifold 310 is also heated, in this case with heating tape 350. A rupture disc 370 is mounted on one end of the manifold 310 for safety. Vapor exits the other end of the manifold 310.

Several embodiments of fuel conditioning devices have been discussed above. Numerous other modifications and variations of the present invention are possible in light of the above teachings. It is therefore to be understood that within the scope of the appended claims, the invention may be practiced otherwise than as specifically described herein.

## Claims

1. A fuel conditioning unit (100) comprising:
a vaporization chamber (110), the vaporization chamber (110) having a sidewall (112) and an end wall;
a heating element (190) attached to the sidewall (112);
at least one fuel nozzle (120) mounted on the end wall, the fuel nozzle (120) being in fluid communication with a supply of liquid fuel consisting essentially of hydrocarbons, the fuel nozzle (120) being configured to produce a spray with a spray angle such that all of the spray impinges on an interior surface of the sidewall (112);
and at least one diluent gas port (230) in fluid communication with the vaporization chamber (110), the diluent gas port being in fluid communication with a supply of diluent gas;
wherein the heating element (190) is configured to heat a portion of the sidewall (112) upon which the spray impinges to a temperature above the boiling point of the least volatile component of the liquid fuel and sufficient to flash vaporize the liquid fuel spray as it contacts the sidewall (112), and the diluent gas and vaporized liquid fuel combine to form a mixture that has a lower dew point than that of the liquid fuel in the absence of the diluent gas; and
wherein the fuel conditioning unit (100) is configured such that the mixture is maintained of a temperature above the dew point of the mixture until the mixture reaches a combustor located downstream of the fuel conditioning unit (100).

2. The fuel conditioning unit (100) of claim 1, wherein the sidewall (112) is cylindrical and the spray is a conical spray.

3. The fuel conditioning unit (100) of claim 1, further comprising at least one additional heating element (190), the additional heating element (190) being configured to keep a portion of the vaporization chamber (110) apart from a portion on which the spray impinges at a temperature above a dew point of the mixture of the diluent gas and vaporized liquid fuel.

4. The fuel conditioning unit (100) of claim 1, further comprising a preheater located between the nozzle (120) and the liquid fuel supply, the preheater being configured to heat the liquid fuel to a temperature above ambient temperature and below a boiling point of the liquid fuel.

5. The fuel conditioning unit (110) of claim 1, wherein the diluent gas is inert.

6. A fuel conditioning system comprising:
a manifold (130); and
a plurality of fuel conditioning units (100) according to claim 1, each of the fuel conditioning units (100) being attached to the manifold (130) to supply a mixture of diluent gas and vaporized liquid fuel to the manifold (130).

7. A method for conditioning a liquid fuel comprising the steps of:
supplying a liquid fuel consisting essentially of hydrocarbons to a vaporization chamber through a nozzle (120) that produces a spray at an angle such that substantially all of the spray impinges upon a heated surface of a vaporization chamber (110), the heated surface being at a temperature above the boiling point of the least volatile component of the liquid fuel and having sufficient heat to flash vaporize the liquid fuel spray, the heated surface being heated by a heating element (190) located outside of the vaporization chamber (110);
supplying a diluent gas to the vaporization chamber (110) such that the vaporized liquid fuel and the diluent gas form a mixture, said mixture having a lower dew point than that of the vaporized liquid fuel in the absence of the diluent gas; and
supplying the mixture to a combustor located downstream of the vaporization chamber (110) such that the mixture is maintained at a temperature above the dew point of the mixture until the mixture undergoes combustion.

8. The method of claim 7, further comprising the step of preheating the liquid fuel to a temperature above ambient temperature and below a boiling point of the liquid fuel.

9. The method of claim 7, wherein the sidewall (112) is cylindrical and the spray is a conical spray.

10. The method of claim 7, further comprising the step of heating a second portion of the vaporization chamber (110) apart from the portion impinged by the spray, the second portion being heated to a temperature above boiling point of a least volatile component of the liquid fuel.

11. The method of claim 7, wherein the diluent gas is inert.

12. The method of claim 7, wherein the diluent gas is supplied in a direction tangential to a direction of the spray to induce a swirling co-flow.

## Patentansprüche

1. Kraftstoffkonditionierungseinheit (100), umfassend
eine Verdampfungskammer (110), wobei die Verdampfungskammer (110) eine Seitenwand (112) und eine Stirnwand aufweist;
ein Heizelement (190), das an der Seitenwand (112) angebracht ist;
mindestens eine Brennstoffdüse (120), die an der Endwand angebracht ist, wobei die Brennstoffdüse (120) in Fluidverbindung mit einem Vorrat an flüssigem Brennstoff steht, der im Wesentlichen aus Kohlenwasserstoffen besteht, wobei die Brennstoffdüse (120) so konfiguriert ist, dass sie einen Sprühnebel mit einem solchen Sprühwinkel erzeugt, dass der gesamte Sprühnebel auf eine Innenfläche der Seitenwand (112) auftrifft;
und mindestens einen Verdünnungsgasanschluss (230), der in Fluidverbindung mit der Verdampfungskammer (110) steht, wobei der Verdünnungsgasanschluss in Fluidverbindung mit einer Zufuhr von Verdünnungsgas steht;
wobei das Heizelement (190) so konfiguriert ist, dass es einen Abschnitt der Seitenwand (112), auf den der Sprühnebel auftrifft, auf eine Temperatur oberhalb des Siedepunkts der am wenigsten flüchtigen Komponente des flüssigen Kraftstoffs erhitzt, die ausreicht, um den Sprühnebel des flüssigen Kraftstoffs blitzartig zu verdampfen, wenn er die Seitenwand (112) berührt, und das Verdünnungsgas und der verdampfte flüssige Kraftstoff sich verbinden, um ein Gemisch zu bilden, das einen niedrigeren Taupunkt hat als der des flüssigen Kraftstoffs in Abwesenheit des Verdünnungsgases; und
wobei die Kraftstoffkonditionierungseinheit (100) so konfiguriert ist, dass das Gemisch auf einer Temperatur oberhalb des Taupunkts des Gemischs gehalten wird, bis das Gemisch eine stromabwärts der Kraftstoffkonditionierungseinheit (100) angeordnete Verbrennungseinrichtung erreicht.

2. Die Kraftstoffaufbereitungseinheit (100) nach Anspruch 1, wobei die Seitenwand (112) zylindrisch ist und das Spray ein konisches Spray ist.

3. Die Kraftstoffkonditionierungseinheit (100) nach Anspruch 1, die ferner mindestens ein zusätzliches Heizelement (190) umfasst, wobei das zusätzliche Heizelement (190) so konfiguriert ist, dass es einen Teil der Verdampfungskammer (110), der von einem Teil, auf den der Sprühnebel auftrifft, entfernt ist, auf einer Temperatur oberhalb eines Taupunkts der Mischung aus dem Verdünnungsgas und dem verdampften flüssigen Kraftstoff hält.

4. Die Kraftstoffkonditionierungseinheit (100) nach Anspruch 1, die ferner einen Vorwärmer umfasst, der zwischen der Düse (120) und der Flüssigkraftstoffzufuhr angeordnet ist, wobei der Vorwärmer so konfiguriert ist, dass er den Flüssigkraftstoff auf eine Temperatur über der Umgebungstemperatur und unter einem Siedepunkt des Flüssigkraftstoffs erwärmt.

5. Die Kraftstoffkonditionierungseinheit (110) nach Anspruch 1, wobei das Verdünnungsgas inert ist.

6. Ein Kraftstoffkonditionierungssystem, umfassend:
einen Verteiler (130); und
eine Vielzahl von Kraftstoffkonditionierungseinheiten (100) nach Anspruch 1, wobei jede der Kraftstoffkonditionierungseinheiten (100) an dem Verteiler (130) angebracht ist, um dem Verteiler (130) ein Gemisch aus Verdünnungsgas und verdampftem flüssigen Kraftstoff zuzuführen.

7. Verfahren zur Konditionierung eines flüssigen Brennstoffs, das die folgenden Schritte umfasst:
Zuführen eines flüssigen Brennstoffs, der im wesentlichen aus Kohlenwasserstoffen besteht, zu einer Verdampfungskammer durch eine Düse (120), die einen Sprühnebel in einem solchen Winkel erzeugt, daß im wesentlichen der gesamte Sprühnebel auf eine beheizte Oberfläche einer Verdampfungskammer (110) auftrifft, wobei die beheizte Oberfläche eine Temperatur oberhalb des Siedepunkts der am wenigsten flüchtigen Komponente des flüssigen Brennstoffs aufweist und genügend Wärme hat, um den Sprühnebel des flüssigen Brennstoffs schlagartig zu verdampfen, wobei die beheizte Oberfläche durch ein Heizelement (190) beheizt wird, das außerhalb der Verdampfungskammer (110) angeordnet ist;
Zuführen eines Verdünnungsgases zu der Verdampfungskammer (110), so dass der verdampfte flüssige Brennstoff und das Verdünnungsgas ein Gemisch bilden, wobei das Gemisch einen niedrigeren Taupunkt hat als der des verdampften flüssigen Brennstoffs in Abwesenheit des Verdünnungsgases; und
Zuführen des Gemischs zu einer Brennkammer, die stromabwärts der Verdampfungskammer (110) angeordnet ist, so dass das Gemisch auf einer Temperatur oberhalb des Taupunkts des Gemischs gehalten wird, bis das Gemisch einer Verbrennung unterzogen wird.

8. Verfahren nach Anspruch 7, das ferner den Schritt des Vorheizens des flüssigen Brennstoffs auf eine Temperatur oberhalb der Umgebungstemperatur und unterhalb eines Siedepunkts des flüssigen Brennstoffs umfasst.

9. Verfahren nach Anspruch 7, wobei die Seitenwand (112) zylindrisch ist und das Spray ein konisches Spray ist.

10. Verfahren nach Anspruch 7, das ferner den Schritt des Erwärmens eines zweiten Abschnitts der Verdampfungskammer (110) abseits des Abschnitts, auf den das Spray auftrifft, umfasst, wobei der zweite Abschnitt auf eine Temperatur oberhalb des Siedepunkts einer am wenigsten flüchtigen Komponente des flüssigen Brennstoffs erwärmt wird.

11. Verfahren nach Anspruch 7, wobei das Verdünnungsgas inert ist.

12. Verfahren nach Anspruch 7, wobei das Verdünnungsgas in einer Richtung tangential zu einer Richtung des Sprays zugeführt wird, um eine verwirbelnde Mitströmung zu induzieren.

## Revendications

1. Une unité de conditionnement du carburant (100) comprenant :
une chambre de vaporisation (110), la chambre de vaporisation (110) ayant une paroi latérale (112) et une paroi d'extrémité ;
un élément chauffant (190) fixé à la paroi latérale (112) ;
au moins un gicleur de carburant (120) monté sur la paroi d'extrémité, le gicleur de carburant (120) étant en communication de fluide avec une alimentation en carburant liquide consistant essentiellement en hydrocarbures, le gicleur de carburant (120) étant configuré pour produire une pulvérisation avec un angle de pulvérisation tel que toute la pulvérisation frappe une surface intérieure de la paroi latérale (112) ;
et au moins un orifice de gaz diluant (230) en communication de fluide avec la chambre de vaporisation (110), l'orifice de gaz diluant étant en communication de fluide avec une alimentation de gaz diluant ;
dans lequel l'élément chauffant (190) est configuré pour chauffer une partie de la paroi latérale (112) sur laquelle la pulvérisation frappe à une température supérieure au point d'ébullition du composant le moins volatil du carburant liquide et suffisante pour vaporiser par vaporisation éclair la pulvérisation de carburant liquide lorsqu'il entre en contact avec la paroi latérale (112), et le gaz diluant et le carburant liquide vaporisé se combinent pour former un mélange qui a un point de rosée inférieur à celui du carburant liquide en l'absence du gaz diluant ; et
dans lequel l'unité de conditionnement du carburant (100) est configurée de telle sorte que le mélange est maintenu à une température supérieure au point de rosée du mélange jusqu'à ce que le mélange atteigne une chambre de combustion située en aval de l'unité de conditionnement du carburant (100).

2. L'unité de conditionnement de carburant (100) selon la revendication 1, dans laquelle la paroi latérale (112) est cylindrique et la pulvérisation est un jet conique.

3. L'unité de conditionnement de carburant (100) selon la revendication 1, comprenant en outre au moins un élément chauffant supplémentaire (190), l'élément chauffant supplémentaire (190) étant configuré pour maintenir une partie de la chambre de vaporisation (110) à l'écart d'une partie sur laquelle le jet pulvérisé frappe à une température supérieure à un point de rosée du mélange de gaz diluant et de carburant liquide vaporisé.

4. L'unité de conditionnement de carburant (100) selon la revendication 1, comprenant en outre un préchauffeur situé entre la buse (120) et l'alimentation en carburant liquide, le préchauffeur étant configuré pour chauffer le carburant liquide à une température supérieure à la température ambiante et inférieure à un point d'ébullition du carburant liquide.

5. L'unité de conditionnement de combustible (110) selon la revendication 1, dans laquelle le gaz diluant est inerte.

6. Un système de conditionnement de carburant comprenant :
un collecteur (130) ; et
une pluralité d'unités de conditionnement de carburant (100) selon la revendication 1, chacune des unités de conditionnement de carburant (100) étant fixée au collecteur (130) pour fournir un mélange de gaz diluant et de carburant liquide vaporisé au collecteur (130).

7. Procédé de conditionnement d'un carburant liquide comprenant les étapes suivantes :
fournir un carburant liquide consistant essentiellement en hydrocarbures à une chambre de vaporisation par l'intermédiaire d'une buse (120) qui produit une pulvérisation à un angle tel que pratiquement tout le jet pulvérisé frappe une surface chauffée d'une chambre de vaporisation (110), la surface chauffée étant à une température supérieure au point d'ébullition du composant le moins volatil du carburant liquide et ayant une chaleur suffisante pour vaporiser par vaporisation éclair le jet de carburant liquide, la surface chauffée étant chauffée par un élément chauffant (190) situé à l'extérieur de la chambre de vaporisation (110) ;
fournir un gaz diluant à la chambre de vaporisation (110) de telle sorte que le carburant liquide vaporisé et le gaz diluant forment un mélange, ledit mélange ayant un point de rosée inférieur à celui du carburant liquide vaporisé en l'absence du gaz diluant ; et
fournir le mélange à un brûleur situé en aval de la chambre de vaporisation (110) de sorte que le mélange soit maintenu à une température supérieure au point de rosée du mélange jusqu'à ce que le mélange subisse une combustion.

8. Méthode selon la revendication 7, comprenant en outre l'étape consistant à préchauffer le combustible liquide à une température supérieure à la température ambiante et inférieure au point d'ébullition du combustible liquide.

9. Procédé selon la revendication 7, dans lequel la paroi latérale (112) est cylindrique et la pulvérisation est une pulvérisation conique.

10. Procédé selon la revendication 7, comprenant en outre l'étape consistant à chauffer une deuxième partie de la chambre de vaporisation (110) à l'écart de la partie touchée par la pulvérisation, la deuxième partie étant chauffée à une température supérieure au point d'ébullition d'un composant le moins volatil du carburant liquide.

11. Méthode selon la revendication 7, dans laquelle le gaz diluant est inerte.

12. Procédé selon la revendication 7, dans lequel le gaz diluant est fourni dans une direction tangentielle à une direction de pulvérisation pour induire un co-courant tourbillonnant.
